# EUROPEAN PATENT SPECIFICATION

(11) **EP 2 082 277 B1**
(45) Date of publication and mention of the grant of the patent: **03.03.2010**
(21) Application number: 07821051.5
(22) Date of filing: 09.10.2007
(51) Int. Cl.: G02B 7/02, B29D 11/00, B05C 3/09, B05C 13/02, B05B 13/02

(54) **OPTICAL LENS HOLDER FOR HOLDING LENSES DURING MANUFACTURING PROCESS**
OPTISCHER LINSENHALTER ZUM HALTEN VON LINSEN WÄHREND EINES HERSTELLUNGSPROZESSES
SUPPORT DE LENTILLE OPTIQUE POUR MAINTENIR DES LENTILLES PENDANT LE PROCÉDÉ DE FABRICATION

(30) Priority: 18.10.2006 EP 06291625
(43) Date of publication of application: 29.07.2009
(73) Proprietor: Essilor International (Compagnie Générale D'Optique), 94220 Charenton le Pont (FR)
(72) Inventor: AIGUEBONNE, Yves, 94220 Charenton-Le-Pont (FR); CRETIER, Annette, 94220 Charenton-Le-Pont (FR); DARMES, Daniel, 94220 Charenton-Le-Pont (FR); ROUSSEL, Eric, 94220 Charenton-le-pont (FR)
(74) Representative: Cabinet Plasseraud
(86) International application number: PCT/EP2007/060680
(87) International publication number: WO 2008/046761

(56) References cited:
- EP-A- 0 483 034
- EP-A1- 1 547 696
- GB-A- 2 159 541
- KR-B1- 100 468 236

## Description

The present invention relates to an optical lens holder; for holding optical lenses during the manufacturing process, especially during dip coating or vaporization manufacturing process steps. The lens holder according to the invention aims at preventing damages to optical lenses and/or to the coating applied on said lens, such as for example sags and halos.

Treating an optical lens often involves applying at least one layer of a coating material on one or both sides of a lens. It is a requirement, for the optical quality of the lens being treated, that the coating is applied uniformly. During the dip coating process, the lens needs to be handled during its total or partial immersion into a tank containing a coating material, and then to be removed from the tank, and drained. During a vaporization process, the lens still needs to be handled.

Various lens holders are described in the prior art; they involve different means for handling the lenses during the manufacture process. Some patents relate to ring-shaped base lens holders combined with three attachment points for retaining the lens in 3 points at its edge, see for example US 6,473,247 or US2004/0036989: both lens holders include 2 means fixed to the base and a third means, which is mobile and adjustable to the diameter of the lens.

EP 1 547 696 discloses a lens holding jig with three holding arms, each being in contact with the edge of the lens, thus defining three contact points between the holding arms and the edge. Other patents, such as for example US 5,325,812, describe a spring clasp for clamping the lens, or as described in WO 2005/075108 a ring comprising a hoop for encircling and clipping the edge of a lens, forming an arc of more than 180 degrees. Another lens holder is described in US2005/0208212 and comprises a supporting means and a first and a second arm defining a lens holder general plane, the arms being mounted on the supporting means through their first end portions and the second end portions of each arm comprising an optical lens accommodating means, said lens accommodating means facing each other, whereby an optical lens can be maintained within the accommodating means of the first and second arms through at least one, preferably one or two contact points between the lens periphery and each of the first and second lens accommodating means.

In addition to the prior art holders, there is still a need to provide a device avoiding the production of defects on lens, leading to a reduction of the optical properties of the lenses, such as the presence of a drop at the top of the lens, or sags and halos at the contact points between the holder and the lens.

This invention aims at providing a device enabling to get a satisfactory spreading quality of coatings during a coating process.

The present invention especially focuses on an optical lens holder which reduces, preferably avoids, the apparition of defects around the contact points of the optical lens with the holder.

In order to reduce or avoid the appearance of such defects during a coating manufacturing step, a limitation of the surface of contact points between the lens and the holder, may be of importance. However, having a sufficient surface of contact for ensuring a satisfactory grip of the lens, is also a requirement.

In other words, the technical problem of the invention is to provide an optical lens holder that leads to a uniform spreading of coating on the surface of the lenses and avoids the presence of coating defects such as clip marks, halos and sags.

Thus, the present invention relates to a lens holder for holding an optical lens during a coating manufacturing step, which comprises
- holding means for holding the optical lens, and
- supporting means for operating the holding means,
said holding means comprising a first and a second arm facing each other and movable toward and away from one another, each arm being connected, on a first part, to the supporting means, and, on a second part, distant from the first part, through connecting means, to an accommodating means, the accommodating means connected to the first arm facing the accommodating means connected to the second arm, the connecting means being such that each accommodating means is movable with at least one degree of freedom,
wherein each accommodating means comprises a first end portion, a second end portion, and an intermediate portion,
the intermediate portion of each accommodating means being in contact with a portion of the edge (9) of the lens when holding the lens, thereby defining a longitudinal contact area (10) between them.

In an embodiment of the invention, the first and the second arm facing each other and movable toward and away from one another, are such that: first arm is connected to the supporting means in a static manner, such as for example through welding means, and second arm is connected to the supporting means in a dynamic manner, such as for example through an elastic articulation means, a spring means, or any suitable means, so that both arms together form a pliers able to retain the lens between the accommodating means.

In another embodiment first and second arms are pivotally joined at a pivot to form a pliers.

According to an embodiment, each arm is connected on a first part, which is one end of the arm, to the supporting means, and on a second part, which is the other end of the arm, to the connecting means. By part is meant any segment or portion of the arm, including the ends.

In one embodiment, the connecting means of the lens holder of the invention are such that each accommodating means may pivot or rotate relative to the arm.

In another embodiment, either first end portion, or second end portion, or both first end and second end portions of the accommodating means of the lens holder of the invention are arranged to be out of contact with the edge of the lens.

Advantageously, the first end portion of the accommodating means of the lens holder of the invention may be designed to decrease the perturbations of the air/liquid interface of the coating bath.

Preferably, the second end portion of the accommodating means of the lens holder of the invention may be designed to optimize drainage of the coating excess.

The length of the longitudinal contact area defined between the intermediate portion of each accommodating means and the portion of the edge in contact therewith comprises between about 5 % and 25 % of the circumference of the lens.

In other words, the total longitudinal continuous contact area between the two intermediate portions of the accommodating means and the edge of the lens does not exceed the half of the lens circumference. Advantageously, in a still more preferred embodiment, the continuous longitudinal contact area between the intermediate portion of the accommodating means and the edge of the lens does not exceed one third of the lens circumference.

The longitudinal form of the contact zones defined between the edge of the lens and the intermediate portion of each of the accommodating means makes it unnecessary to have a three-point contact such as disclosed in EP 1 547 696. Consequently, according to a preferred embodiment of the present invention, the holding means of the lens holder do not comprise a third arm but consist only of a first arm and a second arm.

According to an embodiment, the lens holder of the invention further comprises a gutter positioned under the lens, which in contact with the edge of the lens, preferably at the lower point of the lens.

In still another embodiment, at least the intermediate portion of the accommodating means of the lens holder of the invention includes malleable material at the contact area with the edge of the lens.

In a specific embodiment this malleable material is elastomer selected from the group comprising polyurethane, polyisoprene, polybutadiene, polychloroprene, silicone, ethylene propylene or polyacrylic.

Advantageously, the malleable material is polyurethane resin having a hardness from 60 to 70 shores.

As described above, the invention relates to the field of the coating of lenses. Particularly the invention relates to the varnishing of lenses by dip coating or vaporization.

Various coatings are applied on optical lenses, such as for example, but not exclusively:
- anti-reflective coating which help eliminate reflections and, consequentially, reduce the fatigue and/or stress users may experience while driving at night or working in front of a computer;
- mirror coating, which give the lens a shiny, mirror-like look and tend to reflect harsh light rays emitted from surfaces such as snow and water;
- hard coating which give abrasion-resistant properties;
- anti-smudge coating to protect the underlying coating or bulk lens material from the accumulation of such dirt or grime on the lens surface and facilitate the cleaning of the lens;

It is also known to use dip coating or vaporization for tinting ophthalmic lens or to apply interference layers on the surface of the lenses.
Fig.1 represents a general front view of the lens holder in use (holding a lens).
Fig.2 represents a cross-section of an accommodating means.
Fig.3 is a cross-section showing the contact area between the edge of the lens and an accommodating means.

The following detailed description is of the best presently contemplated modes of carrying out the invention. This description is not to be taken in a limiting sense, but is made merely for the purpose of illustrating general principles of embodiments of the invention.

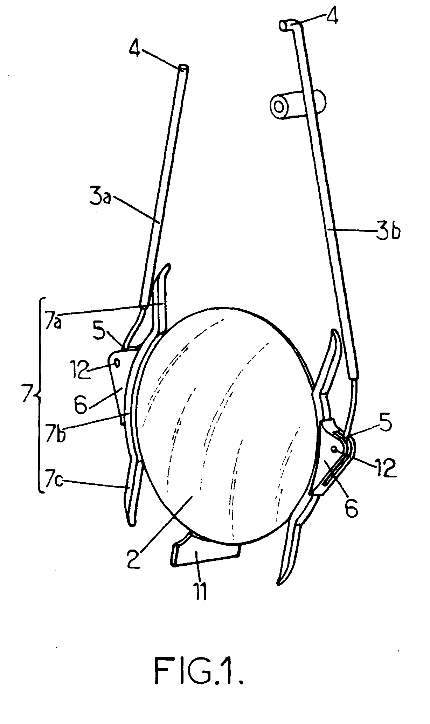

As shown in Fig.1, the present invention relates to a lens holder **1** for holding an optical lens **2** during coating, comprising holding means **3** for holding the optical lens, and supporting means for operating the holding means (not represented). Said holding means comprise a first **3a** and a second arm **3b** facing each other and movable toward and away from one another, each arm being connected on one end **4** to the supporting means, and on the other end **5,** through connecting means **6,** to accommodating means **7** facing each other, the connecting means being such that each accommodating means rotates on pivot **12.** The accommodating means **7** comprise a first end portion **7a,** a second end portion **7c,** and an intermediate portion **7b.** The intermediate portion **7b** of each accommodating means is arranged to be in continuous contact with the edge of the lens when holding the lens.

The specific geometry of the connecting means **6** of the lens holder of the invention is such that each accommodating means **7** may pivot relative to the arm.

In the embodiment shown on Fig.1, both first end **7a** and second end portions **7c** of the accommodating means of the lens holder of the invention are arranged to be out of contact with the edge of the lens. The first end portion **7a** is profiled to decrease the perturbations of the air/liquid interface (so-called wave phenomenon) of the coating bath and/or to break the surface of the coating (e.g. varnish) bath before the removing of the lens holder. For example, the first end portion is tapered or conic. The second end portion **7c** of the accommodating means of the lens holder of the invention is profiled to optimize drainage of the coating excess and to avoid the formation of bubbles or films when the lens is removed from the tank. According to an embodiment, the second end portion is also tapered or conic. In a preferred embodiment, **7a** and **7c** portions have the same profile.

The lens holder of the invention further may comprise a gutter **11** positioned under the lens, and being in contact with the edge of the lens.

In a preferred embodiment of the invention, at least the intermediate portion **7b** of the accommodating means **7** of the lens holder of the invention includes malleable material at the contact area with the edge of the lens. This material is preferably selected from the group comprising elastomer plastics such as for example polyurethane, polyisoprene, polybutadiene, polychloroprene, silicone, ethylene propylene or polyacrylic. More specifically, the malleable material is polyurethane resin having a hardness from 60 to 70 shores.

Optionally, at least the intermediate portion **7b** of the accommodating means **7** of the lens holder of the invention includes thermoplastic, e.g. Santoprene^{™} commercialized by ExxonMobil Chemical.

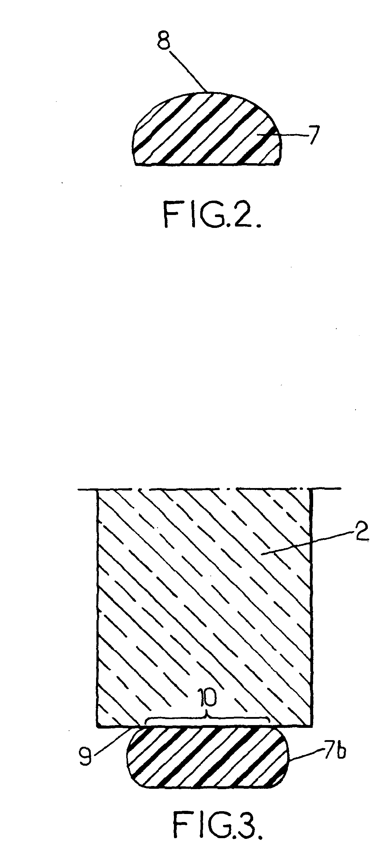

As shown in Fig. 2, the accommodating means **7** are preferably convex across their width **8,** i.e. on the side in contact with the edge of the lens, for a still better adaptation to the design of the lens.

As shown in Fig.3, the continuous contact area **10** between the intermediate portion **7b** of the accommodating means and the edge **9** of the lens does not exceed the half of the lens circumference. Moreover, the convex side **8** of the intermediate portion **7b** of the accommodating means is in contact with the edge **9** of the lens through a continuous contact area **10.** This area **10** is preferably reduced to a minimum, more preferably to less than the width of the edge **9** of the lens.

## Claims

1. A lens holder (1) for holding an optical lens (2) during dip coating, which comprises:
- holding means (3) for holding the optical lens, and
- supporting means for operating the holding means, **characterized in that** said holding means (3) consist of a first arm (3a) and a second arm (3b) facing each other and movable toward and away from one another, each arm being connected to the supporting means and, through connecting means (6), to an accommodating means (7), the accommodating means connected to the first arm facing the accommodating means connected to the second arm, the connecting means (6) being such that each accommodating means (7) is movable with at.least one degree of freedom,
wherein each accommodating means (7) comprise a first end portion (7a), a second end portion (7c), and an intermediate portion (7b),
the intermediate portion (7b) of each accommodating means (7) being in contact with a portion of the edge (9) of the lens when holding the lens, thereby defining a longitudinal contact area (10) between them.

2. The lens holder according to Claim **1,** wherein the connecting means (6) are such that each accommodating means pivots relative to the arm.

3. The lens holder according to Claim **1** or **2,** wherein either first end portion (7a), or second end portion (7c), or both first end and second end portions are arranged to be out of contact with the edge of the lens.

4. The lens holder according to claim **1** to **3,** wherein the length of the longitudinal contact area (10) defined by the intermediate portion (7b) of each accommodating means (7) and the portion of the edge (9) in contact therewith comprises between 5 % and 25 % of the circumference of the lens..

5. The lens holder according to any one of claims **1** to **4,** wherein the second end portion (7c) of the accommodating means is designed to optimize drainage of the coating excess.

6. The lens holder according to any one of claims **1** to **5,** further comprising a gutter (11) positioned under the lens, and being in contact with the edge of the lens.

7. The lens holder according to any one of claims **1** to **6,** wherein at least the intermediate portion (7b) of the accommodating means include malleable material at the contact area with the edge of the lens.

8. An optical lens holder according to any one of claims **1** to **7**, wherein the malleable material is elastomer selected from the group comprising polyurethane, polyisoprene, polybutadiene, polychloroprene, silicone, ethylene propylene or polyacrylic; or is thermoplastic.

9. The lens holder according to any one of claims **1** to **8,** wherein the malleable material is polyurethane resin having a hardness from 60 to 70 shores.

## Patentansprüche

1. Linsenhalter (1) zum Halten einer optischen Linse (2) während Tauchbeschichtens, welcher umfasst:
- ein Haltemittel (3) zum Halten der optischen Linse, und
- ein Unterstützungsmittel zum Betreiben des Haltemittels,
**dadurch gekennzeichnet, dass** das Haltemittel (3) aus einem ersten Arm (3a) und einem zweiten Arm (3b) besteht, welche einander zugewandt sind und welche zueinander hin und voneinander weg beweglich sind, wobei jeder Arm mit dem Unterstützungsmittel, und durch ein Verbindungsmittel (6) mit einem Aufnahmemittel (7) verbunden ist, wobei das Aufnahmemittel, das mit dem ersten Arm verbunden ist, dem Aufnahmemittel zugewandt ist, das mit dem zweiten Arm verbunden ist, wobei das Verbindungsmittel (6) derart ist, dass jedes Aufnahmemittel (7) mit wenigstens einem Freiheitsgrad beweglich ist,
wobei jedes Aufnahmemittel (7) einen ersten Endabschnitt (7a), einen zweiten Endabschnitt (7c) und einen Zwischenabschnitt (7b) umfasst,
wobei der Zwischenabschnitt (7b) von jedem Aufnahmemittel (7) mit einem Abschnitt der Randes (9) der Linse in Kontakt ist, wenn die Linse gehalten wird, wodurch eine Längskontaktfläche (10) zwischen ihnen definiert ist.

2. Linsenhalter nach Anspruch 1, wobei das Verbindungsmittel (6) derart ist, dass jedes Aufnahmemittel relativ zu dem Arm schwenkbar gelagert ist.

3. Linsenhalter nach Anspruch 1 oder 2, wobei entweder der erste Endabschnitt (7a) oder der zweite Endabschnitt (7c) oder der erste und der zweite Endabschnitt so angeordnet sind, dass sie nicht in Kontakt mit dem Rand der Linse sind.

4. Linsenhalter nach Anspruch 1 bis 3, wobei die Länge der Längskontaktfläche (10), die durch den Zwischenabschnitt (7b) von jedem Aufnahmemittel (7) und dem damit in Kontakt stehenden Abschnitt des Randes (9) definiert ist, zwischen 5% und 25% des Umfangs der Linse umfasst.

5. Linsenhalter nach einem der Ansprüche 1 bis 4, wobei der zweite Endabschnitt (7c) des Aufnahmemittels so ausgelegt ist, dass die Drainage des Beschichtungsüberschusses optimiert ist.

6. Linsenhalter nach einem der Ansprüche 1 bis 5, ferner umfassend einen Steg (11), der unter der Linse positioniert ist und mit dem Rand der Linse in Kontakt ist.

7. Linsenhalter nach einem der Ansprüche 1 bis 6, wobei wenigstens der Zwischenabschnitt (7b) des Aufnahmemittels ein verformbares Material an der Kontaktfläche mit dem Rand der Linse umfasst.

8. Optiklinsenhalter nach einem der Ansprüche 1 bis 7, wobei das verformbare Material ein Elastomer ist, welches aus der Gruppe ausgewählt ist, die Polyurethan, Polyisopren, Polybutadien, Polychloropren, Silikon, Äthylen-Propylen oder Polyacryl umfasst oder welches thermoplastisch ist.

9. Linsenhalter nach einem der Ansprüche 1 bis 8, wobei das verformbare Material Polyurethanharz ist, welches eine Shore-Härte von 60 bis 70 aufweist.

## Revendications

1. Support de lentille (1) pour maintenir une lentille optique (2) au cours de l'enduction par immersion, qui comprend :
- un moyen de maintien (3) pour maintenir la lentille optique, et
- un moyen de support pour faire fonctionner le moyen de maintien, **caractérisé en ce que** le moyen de maintien (3) se compose d'un premier bras (3a) et d'un deuxième bras (3b) se faisant face l'un à l'autre et pouvant s'approcher l'un de l'autre et s'éloigner l'un de l'autre, chaque bras étant connecté au moyen de support et, par le biais d'un moyen de connexion (6), à un moyen d'accueil (7), le moyen d'accueil connecté au premier bras faisant face au moyen d'accueil connecté au deuxième bras, le moyen de connexion (6) étant tel que chaque moyen d'accueil (7) est mobile avec au moins un degré de liberté,
dans lequel chaque moyen d'accueil (7) comprend une première partie d'extrémité (7a), une deuxième partie d'extrémité (7c) et une partie intermédiaire (7b),
la partie intermédiaire (7b) de chaque moyen d'accueil (7) étant en contact avec une partie du bord (9) de la lentille lorsque la lentille est maintenue, de manière à définir entre elles une zone de contact longitudinale (10).

2. Support de lentille selon la revendication 1, dans lequel le moyen de connexion (6) est tel que chaque moyen d'accueil pivote par rapport au bras.

3. Support de lentille selon la revendication 1 ou 2, dans lequel la première partie d'extrémité (7a) ou la deuxième partie d'extrémité (7c) ou la première partie d'extrémité et la deuxième partie extrémité sont agencées de manière à ne pas être en contact avec le bord de la lentille.

4. Support de lentille selon l'une quelconque des revendications 1 à 3, dans lequel la longueur de la zone de contact longitudinale (10) définie par la partie intermédiaire (7b) de chaque moyen d'accueil (7) et la partie du bord (9) en contact avec celle-ci est comprise entre 5 % et 25 % de la circonférence de la lentille.

5. Support de lentille selon l'une quelconque des revendications 1 à 4, dans lequel la deuxième partie d'extrémité (7c) du moyen d'accueil est conçue de manière à optimiser le drainage de l'excès d'enduit.

6. Support de lentille selon l'une quelconque des revendications 1 à 5, comprenant en outre une gouttière (11) positionnée sous la lentille, et étant en contact avec le bord de la lentille.

7. Support de lentille selon l'une quelconque des revendications 1 à 6, dans lequel au moins la partie intermédiaire (7b) du moyen d'accueil comprend un matériau malléable au niveau de la zone de contact avec le bord de la lentille.

8. Support de lentille optique selon l'une quelconque des revendications 1 à 7, dans lequel le matériau malléable est un élastomère sélectionné dans le groupe se composant de polyuréthane, poly-isoprène, polybutadiène, polychloroprène, silicone, propylène éthylène ou polyacrylique ; ou est un thermoplastique.

9. Support de lentille selon l'une quelconque des revendications 1 à 8, dans lequel le matériau malléable est une résine de polyuréthane ayant une dureté Shore de 60 à 70.
